# EUROPÄISCHE PATENTSCHRIFT

(11) **EP 3 135 509 B1**
(45) Veröffentlichungstag und Bekanntmachung des Hinweises auf die Patenterteilung: **03.01.2018**
(21) Anmeldenummer: 16179354.2
(22) Anmeldetag: 13.07.2016
(51) Int. Cl.: B60C 23/04

(54) **REIFENDRUCKKONTROLLSYSTEM FÜR EIN FAHRZEUG**
TYRE PRESSURE CONTROL SYSTEM FOR A VEHICLE
SYSTEME DE CONTROLE DE PRESSION DE PNEU POUR UN VEHICULE AUTOMOBILE

(30) Priorität: 25.08.2015 DE 102015114107
(43) Veröffentlichungstag der Anmeldung: 01.03.2017
(73) Patentinhaber: Huf Hülsbeck & Fürst GmbH & Co. KG, 42551 Velbert (DE)
(72) Erfinder: MÖNIG, Herr Stefan, 58332 Schwelm (DE); GORENZWEIG, Herr Igor, 42109 Wuppertal (DE)
(74) Vertreter: Zenz Patentanwälte Partnerschaft mbB

(56) Entgegenhaltungen:
- EP-A2- 1 277 601
- WO-A1-2014/108926

## Beschreibung

Die Erfindung richtet sich auf ein Reifendruckkontrollsystem für ein Fahrzeug zur Ermittlung reifenspezifischer Parameter, aufweisend einen an einer Felge eines Luftreifens des Fahrzeugs anbringbaren Reifendrucksensor, ein Reifenventil, welches einen Ventilschaft mit einer längsverlaufenden Ventilbohrung aufweist, die in einer kalottenartigen Stirnfläche eines Ventilfußes mündet, ein Schraubelement, welches den Reifendrucksensor und das Reifenventil an dessen Ventilfuß durch Eingreifen in die Ventilbohrung verbindet, und eine zur Fixierung des Reifenventils an der Felge dienende und auf einen Gewindeabschnitt des Ventilschafts aufgeschraubte Überwurfmutter.

Ein Reifendruckkontrollsystem der Eingangs bezeichneten Art ist zum Beispiel aus der EP 1 277 601 bekannt. Dieses System sieht vor, an der Innenseite einer Überwurfmutter einen Vorsprung als Sollbruchstelle auszubilden. Die Überwurfmutter wird über den Ventilschaft geführt und auf den Gewindeabschnitt des Ventilschafts aufgeschraubt. Der innere Vorsprung an der Überwurfmutter läuft beim Aufschrauben der Überwurfmutter auf das Reifenventil ab einer bestimmten Stellung auf den Gewindebeginn des Reifenventils auf, so dass der Ventilschaft mit der Überwurfmutter mitgedreht wird. Durch das Mitdrehen wird eine Verschraubung des Ventilschafts auf der Innenseite der Felge mit einem Schraubelement des Reifendrucksensors erreicht. Ist dort das Schraubelement bis zum Anschlag eingedreht, steigt das Drehmoment zwischen Überwurfmutter und Ventilschaft an, so dass der Vorsprung der Überwurfmutter abgeschert wird und die Überwurfmutter weiter auf den Ventilschaft aufgeschraubt werden kann, bis die Überwurfmutter an der Felge anliegt und das Reifenventil an der Felge fixiert ist. Da der Vorsprung innenseitig der Überwurfmutter ausgebildet ist, ist diese Sollbruchstelle für die Montage nicht sichtbar, was dazu führen kann, dass bei einer erneuten Montage des bestehenden Systems eine Überwurfmutter verwendet wird, bei welcher der Vorsprung bereits abgeschert ist, so dass die Überwurfmutter zur Wiederverwendung ungeeignet ist. Darüber hinaus sieht dieser Stand der Technik eine Wiederverwendbarkeit der Überwurfmutter nach deren erster Verwendung bei einem Reifendruckkontrollsystem überhaupt nicht vor, so dass die Überwurfmutter eine Art Einwegteil darstellt, welches aufgrund der plastischen und bleibenden Verformung der Sollbruchstelle bei Wiederverwendung des Systems ausgetauscht werden muss und daher ökonomisch und ökologisch von Nachteil ist.

Ausgehend von diesem Stand der Technik liegt der Erfindung die Aufgabe zugrunde eine Lösung zu schaffen, die auf konstruktiv einfache Weise und kostengünstig ein Reifendruckkontrollsystem bereitstellt, welches eine einfache und zuverlässige Montage gewährleistet und darüber hinaus die Wiederverwendbarkeit aller Bauteile auch nach einmaliger Montage ermöglicht.

Bei einem Sensorsystem der Eingangs bezeichneten Art wird die Aufgabe erfindungsgemäß dadurch gelöst, dass auf dem Gewindeabschnitt des Ventilschafts des Reifenventils wenigstens abschnittsweise zumindest ein elastisch verformbares Klemmelement angeordnet ist, das wenigstens einen Abschnitt des Innengewindes der Überwurfmutter einklemmt, wobei die Überwurfmutter und der Ventilschaft über das zumindest eine Klemmelement bis zu einem vorbestimmten Montagedrehmoment drehfest miteinander verbunden sind und bei Überschreiten des vorbestimmten Montagedrehmoments sich das zumindest eine Klemmelement derart elastisch verformt, dass die Überwurfmutter relativ zu dem Ventilschaft verdrehbar ist.

Vorteilhafte und zweckmäßige Ausgestaltungen und Weiterbildungen der Erfindung ergeben sich aus den Unteransprüchen.

Durch die Erfindung wird ein Reifendruckkontrollsystem zur Verfügung gestellt, welches sich durch eine funktionsgerechte Konstruktion auszeichnet und einen einfachen und kostengünstigen Aufbau aufweist. Im Unterschied zu Systemen aus dem Stand der Technik, bei denen eine Sollbruchstelle im Inneren einer Überwurfmutter ausgebildet ist, was aufgrund der plastischen und damit dauerhaften Verformung der Sollbruchstelle lediglich eine einmalige Verwendung der Überwurfmutter gestattet, ist bei der vorliegenden Erfindung ein elastisch verformbares Klemmelement vorgesehen, welches beim Aufschrauben der Überwurfmutter auf den Ventilschaft eine klemmende Wirkung zwischen Überwurfmutter und Reifenventil erzeugt. Durch diese klemmende Wirkung ist es möglich, in einem ersten Montagezyklus durch Drehung der Überwurfmutter das Schraubmittel in das Reifenventil einzuschrauben, um den Reifendrucksensor innenseitig der Felge am Felgenbett zu fixieren. Denn das Klemmelement sorgt infolge der klemmenden Wirkung bis zu einem vorbestimmten Montagedrehmoment für eine drehfeste Verbindung zwischen der Überwurfmutter und dem Reifenventil. Dabei wird die Überwurfmutter zunächst mit zumindest einer Drehung um 90° bis ca. 720° auf den Gewindeabschnitt des Ventilschafts aufgeschraubt, bevor eine gemeinsame Drehung von Überwurfmutter und Reifenventil erfolgt. Das Ein- und Festschrauben des Schraubmittels erfolgt mit einem Drehmoment von 2,1 bis 2,5 Newtonmeter, wobei nach Erreichen einer Anschlagposition des Schraubmittels am Gehäuse des Reifendrucksensors das Drehmoment zwischen Überwurfmutter und Klemmelement steigt und bei Erreichen eines Montagedrehmoments, welches zumindest vier Newtonmeter beträgt, die Klemmverbindung zwischen Überwurfmutter und Klemmelement überwunden ist, weil sich das Klemmelement aufgrund der Höhe des Montagedrehmoments elastisch verformt und nachgibt. Dadurch ist die Überwurfmutter relativ zu dem Klemmelement drehbar und kann weiter auf den Gewindeabschnitt des Ventilschafts aufgeschraubt werden, bis die Überwurfmutter außenseitig an der Felge anliegt, wodurch dann das Reifendruckkontrollsystem an der Felge befestigt ist. Dadurch, dass das Klemmelement elastisch verformbar ausgebildet ist, ist eine mehrmalige Verwendung bei Montage desselben Klemmelements möglich.

Von besonderem Vorteil ist es gemäß einer Ausgestaltung der Erfindung, wenn das Klemmelement als wenigstens abschnittsweise Beschichtung des Gewindeabschnitts des Ventilschafts ausgebildet ist. Auf diese Weise bilden das Reifenventil und das Klemmelement eine Einheit, so dass bei der Montage ein Vergessen des Klemmelements ausgeschlossen ist.

In Ausgestaltung der Erfindung ist dann weiter vorgesehen, dass das Klemmelement als eine in Längsrichtung des Ventilschafts fadenförmig verlaufende und elastisch verformbare Beschichtung ausgebildet ist. Die Beschichtung ist folglich im Wesentlichen quer zu dem Gewindeverlauf ausgerichtet und erzeugt beim Einschrauben eine klemmende Wirkung. Dabei ist es nicht zwingend notwendig, dass sich die Beschichtung über die gesamte axiale Länge des Gewindeabschnitts erstreckt. Denn die klemmende Wirkung ist nur zur Befestigung des Reifendrucksensors notwendig, so dass die klemmende Wirkung danach nicht mehr zwangsläufig erforderlich ist, um die Überwurfmutter an der Felge festzuschrauben.

Eine besonders günstige Möglichkeit besteht in weiterer Ausgestaltung der Erfindung darin, dass das Klemmelement als ein elastisch verformbarer Sicherungsring ausgebildet ist. Ein solcher Sicherungsring kann zumindest abschnittsweise in den Gewindeabschnitt des Reifenventils eingesetzt oder eingeschraubt sein und sich elastisch verformen, wenn die Überwurfmutter angeschraubt wird.

Von besonderem Vorteil ist es bei dem erfindungsgemäßen Gegenstand, wenn das Klemmelement aus einem elastischen Kunststoff besteht. Besonders bevorzugt ist es in diesem Zusammenhang, wenn das Klemmelement aus Polyamid besteht. In ganz besonderer Ausgestaltung der Erfindung ist es dann ferner vorgesehen, dass das Klemmelement als Polyamid-Fleckbeschichtung ausgebildet ist. Folglich zeichnet sich das Klemmelement durch eine hohe Festigkeit, Steifigkeit und Zähigkeit aus und besitzt darüber hinaus eine gute Beständigkeit gegenüber aggressiven Medien.

Um das Ein- bzw. Aufschrauben der Überwurfmutter zu erleichtern, ist in Ausgestaltung der Erfindung ferner vorgesehen, dass wenigstens die ersten zwei Gewindegänge des Gewindeabschnitts des Reifenventils beschichtungsfrei ausgeführt sind.

Schließlich ist es in Ausgestaltung der Erfindung von Vorteil, wenn das vorbestimmte Montagedrehmoment wenigstens vier Newtonmeter beträgt.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte bevorzugte Ausführungsbeispiele der Erfindung dargestellt sind. In der Zeichnung zeigt:
Figur 1 den hinteren Teil eines Fahrzeugs mit einer Felge, einem Luftreifen und einem Reifenventil,
Figur 2 eine perspektivische Darstellung auf eine Felge, an der ein Reifendruckkontrollsystem gemäß der vorliegenden Erfindung angebracht ist,
Figur 3 eine Perspektivansicht auf das erfindungsgemäße Reifendruckkontrollsystem, wobei der Konturverlauf der Felge lediglich angedeutet ist,
Figur 4 eine perspektivische Einzelteildarstellung des erfindungsgemäßen Reifendruckkontrollsystems,
Figur 5 einen ersten Montageschritt, bei dem das Reifenventil, an dem ein Reifendrucksensor angebracht ist, durch ein Durchgangsloch in der Felge gesteckt wird,
Figur 6 einen zweiten Montageschritt, bei dem das Reifenventil innenseitig an die Felge gedrückt wird und eine Überwurfmutter über den durchgesteckten Abschnitt des Reifenventils gesteckt wird,
Figur 7 einen dritten Montageschritt, bei dem die Überwurfmutter auf einen Gewindeabschnitt des Reifenventils geschraubt wird,
Figur 8 einen vierten Montageschritt, bei dem der Reifendrucksensor an das Felgenbett gedrückt wird,
Figur 9 einen fünften Montageschritt, bei dem das Schraubelement mit dem Reifendrucksensor verschraubt wird,
Figur 10 einen sechsten Montageschritt, bei dem ein vorbestimmtes Montagedrehmoment erreicht wird und eine drehfeste Verbindung zwischen Überwurfmutter und Ventilkörper ausgehoben ist, so dass die Überwurfmutter mit der Felge fest verschraubt werden kann,
Figur 11 in perspektivischer Ansicht eine erste Ausführungsform eines erfindungsgemäßen Klemmelements und
Figur 12 in weiterer perspektivischer Ansicht eine zweite Ausführungsform eines erfindungsgemäßen Klemmelements.

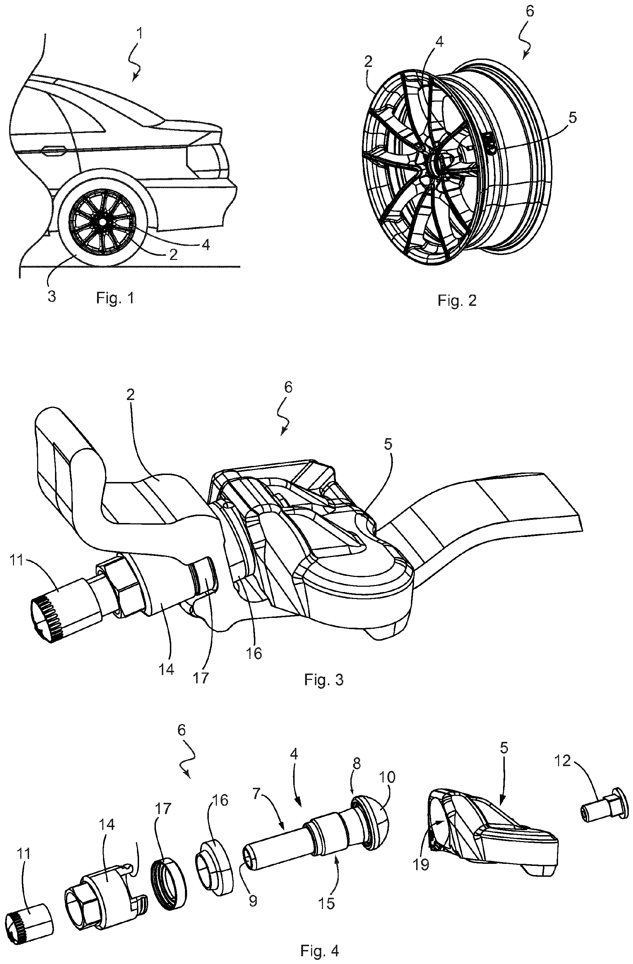

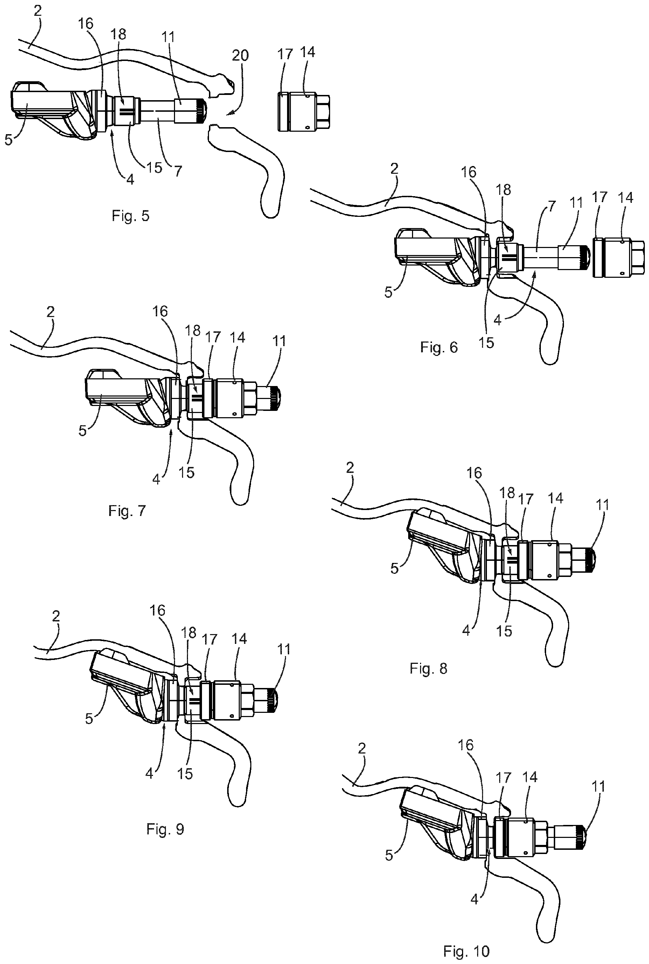

In Figur 1 ist das Heck eines Fahrzeugs 1 und ein auf einer Felge 2 sitzender, hinterer Luftreifen 3 zu sehen. Aus der Felge 2 ragt ein Reifenventil 4 hervor, an dessen Ventilfuß 8 (siehe Figur 4) ein Reifendrucksensor 5 befestigt ist, wie es aus den Figuren 2 und 3 ersichtlich ist. Figur 3 zeigt dabei eine Ansicht eines erfindungsgemäßen Reifendruckkontrollsystems 6, wobei der Konturverlauf der Felge 2 aus Gründen einer besseren Übersichtlichkeit in der Figur 3 nur angedeutet ist. In Figur 4 ist das erfindungsgemäße Reifendruckkontrollsystem 6, welches zur Ermittlung reifenspezifischer Parameter dient, ebenfalls in einer perspektivischen Darstellung gezeigt, allerdings hier in einer Einzelteildarstellung. In der Felge 2 ist eine lediglich aus der Figur 5 ersichtliche Durchgangsöffnung 20 ausgeformt, durch die ein Ventilschaft 7 des Reifenventils 4 gesteckt ist. Das Reifenventil 4 weist eine axial verlaufende Ventilbohrung 9 (siehe unter anderem Figur 4) auf, die in einer kalottenartigen Stirnfläche 10 des Ventilfußes 8 mündet. An dem dem Ventilfuß 8 fernen Ende des Reifenventils 4 ist eine Ventilkappe 11 auf das Ende aufschraubbar. Der Reifendrucksensor 5 ist über ein Schraubelement 12, welches zum Beispiel eine Hohlschraube sein kann, in bekannter Weise an dem Reifenventil 4 fixiert, indem das Schraubelement 12 in die Ventilbohrung 9 eingeschraubt wird. Dabei ist die kalottenartige Stirnfläche 10 des Ventilfußes 8 in einer Kaverne 19 des Gehäuses des Reifendrucksensors 5 (siehe zum Beispiel Figur 4) angeordnet. Auf der anderen Seite der Felge 2 ist das Reifenventil 4 mit Hilfe einer Überwurfmutter 14 an der Felge 2 fixiert, die mit ihrem Innengewinde 23 (siehe die zum Teil geschnittene Darstellung der Überwurfmutter 14 in Figur 4) auf einen Gewindeabschnitt 15 aufgeschraubt wird, der auf dem Ventilschaft 7 des Reifenventils 4 ausgebildet ist. Zwischen dem Ventilfuß 8 und der Felge 2 ist ein elastischer Ring 16 auf den Ventilschaft 7 aufgeschoben, der innenseitig der Felge 2 eine Art Dämpfer zwischen Felge 2 und Reifendrucksensor 5 darstellt und die Felge 2 von innen abdichtet. Außenseitig der Felge 2 ist ein Felgenschutzring 17 angeordnet, der ebenfalls auf den Ventilschaft 7 aufgeschoben ist und zwischen der Überwurfmutter 14 und der Felge 2 angeordnet ist. Der Felgenschutzring 17 dient dem Schutz der Felge 2 vor Beschädigung bei einem zu hohen Anzugsdrehmoment der Überwurfmutter 14 und dichtet zusätzlich die Durchgangsöffnung 20 der Felge 2 ab. Erfindungsgemäß ist auf dem Gewindeabschnitt 15 des Ventilschafts 7 des Reifenventils 4 wenigstens abschnittsweise zumindest ein elastisch verformbares Klemmelement 18 angeordnet, welches das Reifenventil 4 mit der Überwurfmutter 14 bis zu einem vorbestimmten Montagedrehmoment drehfest miteinander verbindet, worauf nachstehend noch im Detail eingegangen wird.

Zuvor ist in den Figuren 5 bis 10 in schematischer Weise der Montageverlauf des erfindungsgemäßen Reifendruckkontrollsystems 6 an der Felge 2 gezeigt. Vor der eigentlichen Montage ist bereits der Reifendrucksensor 5 mit dem Reifenventil 4 verschraubt, wobei die Verschraubung noch relativ locker ist und eine relative Bewegung zwischen dem Reifenventil 4 und dem Reifendrucksensor 5 erlaubt. Mit anderen Worten erlaubt die kalottenartige Stirnfläche 10 des Ventilfußes 8, die in der Kaverne 19 des Reifendrucksensors 5 angeordnet ist, eine relative Schwenkbewegung. In einem ersten Montageschritt (siehe Figur 5) wird das Reifenventil 4 durch eine Durchgangsöffnung 20 in der Felge 2 durchgesteckt, so dass der Gewindeabschnitt 15 des Ventilschafts 7 auf der anderen (außen liegenden) Seite der Felge 2 angeordnet ist, wie es in Figur 6 gezeigt ist. In einem zweiten Montageschritt (siehe Figur 6) wird dann das Reifenventil 4 innenseitig an die Felge 2 gedrückt. Ferner wird in einem dritten Montageschritt (siehe Figur 7) die Überwurfmutter 14 auf den durch die Durchgangsöffnung 20 hindurchgesteckten Ventilschaft 7 mit dem angrenzenden Gewindeabschnitt 15 aufgesteckt. Dabei wird die Überwurfmutter 14 auf den Gewindeabschnitt 15 des Reifenventils 4 aufgeschraubt, wobei das Aufschrauben mit maximal bis zu zwei vollen Umdrehungen (<720°) erfolgt. Denn eine unvollständige Umdrehung reicht aus, um eine drehfeste Verbindung des Klemmelements 18 mit dem Reifenventil 4 und der Überwurfmutter 14 herzustellen, worauf nachstehend noch im Detail eingegangen wird. In einem vierten Montageschritt (siehe Figur 8) wird der Reifendrucksensor 5 an das Felgenbett der Felge 2 angedrückt, so dass das Gehäuse des Reifendrucksensors 5 auf dem Felgenbett aufliegt. Anschließend wird in einem fünften Montageschritt (siehe Figur 9) das Schraubelement 12 mit dem Reifendrucksensor verschraubt, indem die Überwurfmutter 14 gedreht wird. Die Überwurfmutter 14 ist erfindungsgemäß über das Klemmelement 18 mit dem Ventilschaft 7 bis zu einem vorbestimmten Montagedrehmoment drehfest verbunden, so dass eine anfängliche Drehbewegung der Überwurfmutter 14 zu einem Festziehen des Schraubelements 12 führt, bis das Schraubelement 12 bis zu einem Anschlag am Gehäuse des Reifendrucksensors 5 eingeschraubt ist. Auf diese Weise wird eine Verschraubung des Ventilschafts 7 auf der Innenseite der Felge 2 mit dem Schraubelement 12 des Reifendrucksensors 5 erreicht. Ist dort das Schraubelement 12 bis zum Anschlag eingedreht, so steigt das Drehmoment zwischen dem Klemmelement 18 und der Überwurfmutter 14 über das vorbestimmte Montagedrehmoment an, so dass das Klemmelement 18 sich elastisch verformt und die Klemmverbindung zwischen Klemmelement 18 und Überwurfmutter 14 gelöst wird, wodurch die Überwurfmutter 14 weiter auf den Gewindeabschnitt 15 des Ventilschafts 7 aufgeschraubt werden kann, bis die Überwurfmutter 14 an der Felge 2 anliegt und das Reifenventil 4 an der Felge 2 fixiert ist (siehe Figur 10).

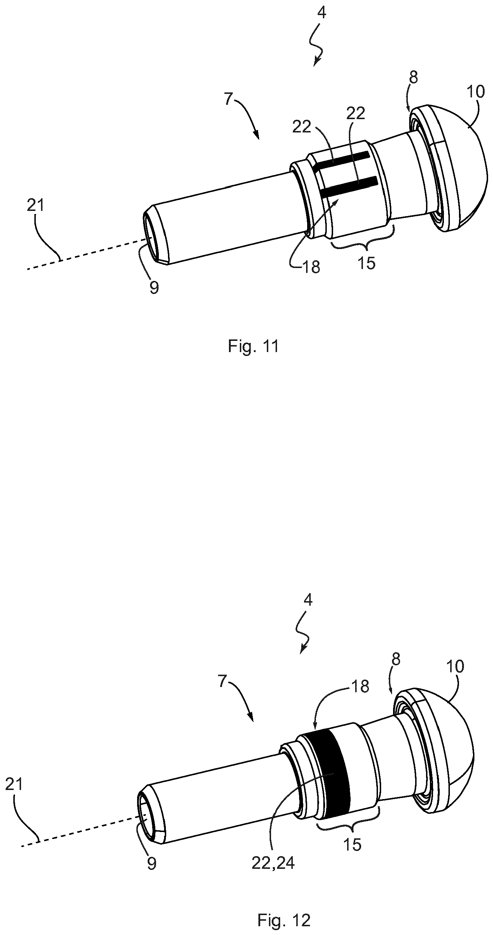

Die Figuren 11 und 12 zeigen das Reifenventil 4 für unterschiedliche Ausführungsformen des erfindungsgemäßen Klemmelements 18. Als Gemeinsamkeit der beiden Ausführungsformen ist das Klemmelement 18, welches elastisch verformbar ausgebildet ist, zumindest abschnittsweise auf dem Gewindeabschnitt 15 angeordnet. Mit anderen Worten ist es für die Erfindung nicht zwingend notwendig, dass das Klemmelement 18 den gesamten Gewindeabschnitt 15 abdecken muss. Es reicht aus, wenn das Klemmelement 18 nur einen Teil des Gewindeabschnitts 15 abdeckt.

In Figur 11 umfasst das Klemmelement 18 zwei fadenförmig ausgebildete und in Längsrichtung 21 des Reifenventils 4 verlaufende Beschichtungsstege 22, die elastisch verformbar ausgeführt sind und den Gewindeabschnitt 15 des Reifenventils 4 nur abschnittsweise abdecken. Denkbar ist natürlich auch, dass nur ein fadenförmiger Beschichtungssteg 22 oder mehrere davon auf dem Gewindeabschnitt 15 des Reifenventils 4 aufgebracht sein können. Natürlich sind auch andere Formen neben der Stegform denkbar, welches das als Beschichtung 22 ausgeführte Klemmelement 18 aufweisen kann, solange der Gewindeabschnitt 15 zumindest abschnittsweise mit dem elastisch verformbaren Klemmelement 18 bzw. mit der Beschichtung 22 versehen ist. So ist es beispielsweise auch denkbar, dass das Klemmelement 18 als Polyamid-Fleckbeschichtung ausgebildet sein kann.

Auch bei der zweiten Ausführungsform gemäß Figur 12 ist das Klemmelement 18 abschnittsweise auf dem Gewindeabschnitt 15 des Reifenventils 4 angeordnet. Das Klemmelement 18 erstreckt sich hierbei nicht in Längsrichtung 22 sondern ist als umlaufende Beschichtung 22 oder als ein Sicherungsring 24 ausgebildet. Das als Beschichtung 22 oder Sicherungsring 24 ausgebildete Klemmelement 18 ist ebenfalls elastisch verformbar ausgebildet und deckt ebenso wie die in Figur 11 gezeigte Ausführungsform nur einen Teil des Gewindeabschnitts 15 in Längsrichtung 21 des Reifenventils 4 ab. Da die Beschichtung 22 und der Sicherungsring 24 dieselbe Erscheinungsform auf dem Gewindeabschnitt 15 des Reifenventils 4 aufweisen, gilt das in Figur 12 gezeigte Ausführungsbeispiel sowohl für ein Klemmelement 18 in Form einer Beschichtung 22 als auch für ein Klemmelement 18 in Form eines Sicherungsringes 24.

Für die in den Figuren 11 und 12 gezeigten Ausführungsformen ist vorgesehen, dass das Material des Klemmelements 18 bzw. der Beschichtung 22 bzw. des Sicherungsringes 24 ein elastisch verformbarer Kunststoff ist, wie zum Beispiel Polyamid, also einem teilkristallinen thermoplastischen Polymer. Dieser auf einen Teil des Gewindeabschnitts 15 aufgebrachte Kunststoff erzeugt beim Einschrauben der Überwurfmutter 14 eine klemmende Wirkung. Der axiale Spielraum zwischen dem Innengewinde 23 der Überwurfmutter 14 und dem Gewindeabschnitt 15 des Reifenventils 4 wird durch das Material des Klemmelements 18 ausgefüllt und erzielt dadurch eine hohe Flächenpressung zwischen den gegenüberliegenden, unbeschichteten Gewindflanken. Diese klemmende Wirkung infolge der Beschichtung 22 bzw. des Sicherungsringes 24 bleibt bei einem ersten Montagezyklus erhalten, bis der Reifendrucksensor 5 an dem Felgenbett der Felge 2 anliegt und das Schraubmittel 12 angezogen ist. Das Festschrauben des Schraubelements 14 zur Fixierung des Reifendrucksensors 5 ist bereits bei einem Drehmoment von etwa zwei bis zweieinhalb Newtonmeter abgeschlossen. Wenn der Reifendrucksensor 5 fixiert ist, dann steigt das Drehmoment zwischen Überwurfmutter 14 und Reifenventils 4 bei weiterem Einschrauben der Überwurfmutter 14 an. Wenn das vorbestimmte Montagedrehmoment erreicht ist, wird die klemmende Verbindung zwischen Überwurfmutter 14 und Reifenventil 4 gelöst, weil das elastisch verformbare Klemmelement 14 nachgibt. Für die in den Figuren 11 und 12 dargestellten Ausführungsformen ist vorgesehen, dass das vorbestimmte Montagedrehmoment wenigstens vier Newtonmeter beträgt. Dadurch ist gewährleistet, dass die Überwurfmutter 14 mit dem Reifenventil 4 bis zu dem vorbestimmten Montagedrehmoment drehfest verbunden ist und diese drehfeste Verbindung erst ab dem vorbestimmten Montagedrehmoment gelöst wird, so dass sich dann das Klemmelement 18 derart elastisch verformt, dass die Überwurfmutter 14 relativ zu dem Ventilschaft 7 verdrehbar ist. Wenn die Gewindeverbindung aufgelöst wird, kehrt das Klemmelement 18 aufgrund seiner elastischen Eigenschaften in seine ursprüngliche Form zurück und kann ein weiteres Mal verwendet werden, um eine Klemmverbindung zwischen der Überwurfmutter 14 und dem Reifenventil 4 herzustellen. Der Erfinder hat herausgefunden, dass ein solches elastisches Klemmelement bis zu zehnmal verwendet werden kann ohne dass Einbußen in der Klemmwirkung zu verzeichnen wären.

Soweit vorstehend bei den beschriebenen Ausführungsformen gleiche Bezugszeichen verwendet werden, betreffen diese jeweils identische oder gleiche Elemente oder Bauteile.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Um beispielsweise das Ein- bzw. Aufschrauben der Überwurfmutter 14 zu erleichtern, können wenigstens die ersten zwei Gewindegänge des Gewindeabschnitts 15 beschichtungsfrei (ohne Beschichtung 22) ausgeführt sein.

## Patentansprüche

1. Reifendruckkontrollsystem (6) für ein Fahrzeug (1) zur Ermittlung reifenspezifischer Parameter, aufweisend:
einen an einer Felge (2) eines Luftreifens (3) des Fahrzeugs (1) anbringbaren Reifendrucksensor (5),
ein Reifenventil (4), welches einen Ventilschaft (7) mit einer längsverlaufenden Ventilbohrung (9) aufweist, die in einer kalottenartigen Stirnfläche (10) eines Ventilfußes (8) mündet,
ein Schraubelement (12), welches den Reifendrucksensor (5) und das Reifenventil (4) an dessen Ventilfuß (8) durch Eingreifen in die Ventilbohrung (9) verbindet, und
eine zur Fixierung des Reifenventils (4) an der Felge (2) dienende und auf einen Gewindeabschnitt (15) des Ventilschafts (7) aufgeschraubte Überwurfmutter (14),
**dadurch gekennzeichnet, dass**
auf dem Gewindeabschnitt (15) des Ventilschafts (7) des Reifenventils (4) wenigstens abschnittsweise zumindest ein elastisch verformbares Klemmelement (18) angeordnet ist, das wenigstens einen Abschnitt des Innengewindes (23) der Überwurfmutter (14) einklemmt, wobei die Überwurfmutter (14) und der Ventilschaft (7) über das zumindest eine Klemmelement (18) bis zu einem vorbestimmten Montagedrehmoment drehfest miteinander verbunden sind und bei Überschreiten des vorbestimmten Montagedrehmoments sich das zumindest eine Klemmelement (18) derart elastisch verformt, dass die Überwurfmutter (14) relativ zu dem Ventilschaft (7) verdrehbar ist.

2. Reifendruckkontrollsystem (6) nach Anspruch 1, **dadurch gekennzeichnet, dass** das Klemmelement (18) als wenigstens abschnittsweise Beschichtung (22) des Gewindeabschnitts (15) des Ventilschafts (7) ausgebildet ist.

3. Reifendruckkontrollsystem (6) nach Anspruch 2, **dadurch gekennzeichnet, dass** das Klemmelement (18) als eine in Längsrichtung (21) des Ventilschafts (7) fadenförmig verlaufende und elastisch verformbare Beschichtung (22) ausgebildet ist.

4. Reifendruckkontrollsystem (6) nach Anspruch 1 oder 2, **dadurch gekennzeichnet, dass** das Klemmelement (18) als ein elastisch verformbarer Sicherungsring (24) ausgebildet ist.

5. Reifendruckkontrollsystem (6) nach einem der vorhergehenden Ansprüche, **dadurch gekennzeichnet, dass** das Klemmelement (18) aus einem elastischen Kunststoff besteht.

6. Reifendruckkontrollsystem (6) nach einem der vorhergehenden Ansprüche, **dadurch gekennzeichnet, dass** das Klemmelement (18) aus Polyamid besteht.

7. Reifendruckkontrollsystem (6) nach Anspruch 1 oder 2, **dadurch gekennzeichnet, dass** das Klemmelement (18) als Polyamid-Fleckbeschichtung ausgebildet ist.

8. Reifendruckkontrollsystem (6) nach Anspruch 1 oder 2, **dadurch gekennzeichnet, dass** wenigstens die ersten zwei Gewindegänge des Gewindeabschnitts (15) beschichtungsfrei ausgeführt sind.

## Claims

1. A tire pressure control system (6) for a vehicle (1) for determining tire-specific parameters, comprising:
a tire pressure sensor (5) attachable to a rim (2) of a pneumatic tire (3) of the vehicle (1),
a tire valve (4) which has a valve stem (7) having a longitudinally extending valve bore (9) that opens into a dome-like end face (10) of a valve base (8),
a screw element (12) which connects the tire pressure sensor (5) and the tire valve (4) at the valve base (8) thereof by engaging into the valve bore (9), and
a union nut (14) that serves for fixing the tire valve (4) on the rim (2) and is screwed onto a threaded portion (15) of the valve stem (7),
**characterized in that**
on the threaded portion (15) of the valve stem (7) of the tire valve (4) there is arranged, at least in sections, an elastically deformable clamping element (18) that clamps at least one portion of the internal thread (23) of the union nut (14), wherein the union nut (14) and the valve stem (7) a connected to one another in a rotationally fixed manner up to a predetermined installation torque via the at least one clamping element (18), and when exceeding the predetermined installation torque, the at least one clamping element (18) elastically deforms in such a manner that the union nut (14) can be rotated relative to the valve stem (7).

2. The tire pressure control system (6) according to claim 1, **characterized in that** the clamping element (18) is formed as a coating (22) provided at least in sections of the threaded portion (15) of the valve stem (7).

3. The tire pressure control system (6) according to claim 2, **characterized in that** the clamping element (18) is formed as a coating (22) that extends in a thread-shaped manner in a longitudinal direction (21) of the valve stem (7) and is elastically deformable.

4. The tire control system (6) according to claim 1 or 2, **characterized in that** the clamping element (18) is formed as an elastically deformable locking ring (24).

5. The tire control system (6) according to any one of the preceding claims, **characterized in that** the clamping element (18) is composed of an elastic plastic material.

6. The tire control system (6) according to any one of the preceding claims, **characterized in that** the clamping element (18) is composed of polyamide.

7. The tire control system (6) according to claim 1 or 2, **characterized in that** the clamping element (18) is formed as a polyamide spot coating.

8. The tire control system (6) according to claim 1 or 2, **characterized in that** at least the first two threads of the threaded portion (15) are designed without coating.

## Revendications

1. Système de contrôle de la pression des pneus (6) pour un véhicule (1), destiné à déterminer des paramètres spécifiques des pneus, comportant :
un capteur de pression des pneus (5) susceptible d'être monté sur une jante (2) d'un pneumatique (3) du véhicule (1),
une valve de pneu (4), laquelle comporte une tige de valve (7) avec un perçage de valve (9) s'étendant en longueur qui débouche dans une face frontale (10) en forme de calotte d'un pied de valve (8),
un élément à visser (12), lequel relie le capteur de pression des pneus (5) et la valve de pneu (4) sur son pied de valve (8) par engagement dans le perçage de valve (9) et
un écrou de raccordement (14) destiné à fixer la valve de pneu (4) sur la jan
te (2) et vissé sur un tronçon fileté (15) de la tige de valve (7), **caractérisé en ce**
**qu'**au moins sur des parties du tronçon fileté (15) de la tige de valve (7) de la valve de pneu (4) est placé au moins un élément de serrage (18) élastiquement déformable, qui enserre au moins un tronçon du taraudage (23) de l'écrou de raccordement (14), l'écrou de raccordement (14) et la tige de valve (7) étant reliés l'un à l'autre de manière solidaire en rotation jusqu'à un couple de serrage au montage prédéfini par l'intermédiaire de l'au moins un élément de serrage (18) et au dépassement du couple de serrage au montage prédéfini, l'au moins un élément de serrage (18) se déformant élastiquement de telle sorte que l'écrou de raccordement (14) puisse tourner par rapport à la tige de valve (7).

2. Système de contrôle de la pression des pneus (6) selon la revendication 1, **caractérisé en ce que** l'élément de serrage (18) est conçu sous la forme d'un revêtement (22) d'au moins des parties du tronçon fileté (15) de la tige de valve (7).

3. Système de contrôle de la pression des pneus (6) selon la revendication 2, **caractérisé en ce que** l'élément de serrage (18) est conçu sous la forme d'un revêtement (22) s'étendant sous la forme d'un fil dans la direction longitudinale (21) de la tige de valve (7) et élastiquement déformable.

4. Système de contrôle de la pression des pneus (6) selon la revendication 1 ou 2, **caractérisé en ce que** l'élément de serrage (18) est conçu sous la forme d'une bague de blocage (24) élastiquement déformable.

5. Système de contrôle de la pression des pneus (6) selon l'une quelconque des revendications précédentes, **caractérisé en ce que** l'élément de serrage (18) est composé d'une matière plastique élastique.

6. Système de contrôle de la pression des pneus (6) selon l'une quelconque des revendications précédentes, **caractérisé en ce que** l'élément de serrage (18) est en polyamide.

7. Système de contrôle de la pression des pneus (6) selon la revendication 1 ou 2, **caractérisé en ce que** l'élément de serrage (18) est conçu sous la forme d'un revêtement par touches de polyamide.

8. Système de contrôle de la pression des pneus (6) selon la revendication 1 ou 2, **caractérisé en ce qu'**au moins les premiers pas du filetage du tronçon fileté (15) sont réalisés sans revêtement.
